# EUROPEAN PATENT APPLICATION

(11) **EP 4 751 986 A1**
(43) Date of publication of application: **03.06.2026**
(21) Application number: 24860489.4
(22) Date of filing: 02.09.2024
(51) Int. Cl.: B60L 53/66, G06Q 20/14, G06Q 50/40

(54) **PNC-BASED ELECTRIC VEHICLE CHARGING CONTROL DEVICE AND METHOD**

(30) Priority: 01.09.2023 KR 20230116331
(71) Applicant: Yura Corporation Co., Ltd., Seongnam-si, Gyeonggi-do 13494 (KR)
(72) Inventor: KANG, Sae Hun, Seoul 08760 (KR)
(74) Representative: ABG Intellectual Property Law, S.L.
(86) International application number: PCT/KR2024/013147
(87) International publication number: WO 2025/048573

(57) **Abstract**

The present invention discloses a PnC-based electric vehicle charging control apparatus and method. A PnC-based electric vehicle charging control apparatus and method according to a preferred embodiment of the present invention, in a case where payment authorization fails in a payment authorization process performed before actual charging and cost payment occur although the validity of the contract certificate has been authenticated, divides the initial target charging amount into a plurality of sub-charging amounts and sequentially performs charging and fee payment for each sub-charging amount, thereby enabling automatic charging up to a payable amount even in a state where the user cannot confirm the payable charging power amount and charging fee.

## Description

### Technical Field

The present invention relates to an electric vehicle charging control apparatus and method, and more specifically, to a Plug-and-Charge (PnC) based electric vehicle charging control apparatus and method.

### Background Art

Recently, as the adoption of electric vehicles has been accelerating, issues related to electric vehicle charging have been highlighted, and one of which is the problem of payment of costs during charging.

An electric vehicle starts charging after going through a certain authorization process. Representative authorization methods include a Plug-and-Charge (PnC) method in which authorization and payment are automatically completed using a contract certificate stored in the vehicle, and an external payment method in which identification, authorization, and payment are performed through a charger by an external identification means such as a user's credit card or RFID.

Among these, the PnC method, which has recently been spotlighted, is an automatic authorization method that does not require any special task from the user for charging payment, and automatically identifies the user and authorizes charging. Specifically, the plug-and-charge method refers to a method in which user authentication and charging are performed when a charging plug is connected between an electric vehicle and a charging station.

The ISO 15118 standard defines authentication based on a Public Key Infrastructure (PKI) as a basis for implementing the plug-and-charge method. According to the PKI system according to the ISO 15118 standard, a contract certificate generated based on an MO root certificate (MO RootCA cert.) issued by an MO Root Certificate Authority (MO RootCA) affiliated with a Mobility Operator (MO) is installed in the electric vehicle. In the charging station, a charging station certificate (SECC cert.) generated based on a V2G root certificate (V2G RootCA cert.) issued by a Vehicle-to-Grid (V2G) Root Certificate Authority (V2G RootCA) is installed.

In the authentication process and payment authorization process, the charging station receives and verifies the contract certificate chain from the electric vehicle, confirms whether it is a vehicle for which a normal charging contract has been established, and performs the payment procedure.

However, in the case of the conventional PnC-type charging payment method, before charging starts, only validity of a contract certificate linked to a payment means (such as a credit card, a bank account, or the like) is authenticated, and when the validity of the contract certificate is authenticated, charging is started without verification of payment capability, and after charging is completed, payment for the charging fee is requested through the payment method (such as a credit card, a bank account, or the like) linked with the contract certificate.

In this case, when the limit of the credit card linked to the contract certificate is exceeded or the balance in the bank account is insufficient, a problem occurs in that the actual payment is not performed. Consequently, a situation occurs in which charging is completed, but payment of the charging fee is impossible.

In addition, according to the ISO 15118 standard defining the current PnC charging method, even if the user attempts to enter the amount of power to be charged and verify whether payment for the corresponding amount of power is possible before power transmission, only the possibility of payment can be confirmed, and information on up to what amount of power or amount of money payment is possible cannot be confirmed.

Therefore, from the user's perspective, if a notification is received that payment for a specific amount of power is impossible, the user must re-enter and confirm whether payment for another amount of power is possible. If, even in this case, a notification is received that payment is impossible, there exists a problem of having to repeat the cumbersome task of entering and confirming again whether payment for another amount of power is possible.

### Detailed Description of the Invention

### Technical Problem

A technical problem to be solved by the present invention is to provide a PnC-based electric vehicle charging control apparatus and method capable of automatically performing charging up to an amount payable with a payment means linked to a contract certificate when charging an electric vehicle according to the PnC charging method.

### Solution to Problem

According to a preferred embodiment of the present disclosure for solving the above-mentioned technical problems, there is provided a PnC (Plug and Charge)-based electric vehicle charging control method performed in an electric vehicle charging control apparatus including a memory storing predetermined instructions and a processor. The PnC-based electric vehicle charging control method comprises: (a) requesting, by the processor, payment authorization for a charging cost of an initial target charging amount from a charging station, and if payment authorization fails, dividing the initial target charging amount into a plurality of sub-charging amounts; (b) calculating, by the processor, a charging cost for a sub-charging amount and requesting payment authorization for the calculated charging cost from the charging station; and (c) if payment authorization for the sub-charging amount is successful, performing, by the processor, charging for the sub-charging amount and settling the charging cost, checking whether charging of the initial target charging amount is completed, and if charging of the initial target charging amount is not completed, proceeding to the step (b) to perform charging for the next sub-charging amount.

In addition, the PnC-based electric vehicle charging control method according to another preferred embodiment of the present disclosure may further comprise, before the step (a): when the charging station is connected to the electric vehicle, transmitting, by the processor, a contract certificate stored in the memory to the charging station to request validity authentication of the contract certificate; and if the validity of the contract certificate is authenticated, receiving, by the processor, a charging rate table from the charging station and calculating the charging cost of the initial target charging amount according to the charging rate table.

In addition, the PnC-based electric vehicle charging control method according to another preferred embodiment of the present disclosure may further comprise, if payment authorization for the sub-charging amount fails, disconnecting a charger connector and terminating the charging process by the processor.

In addition, in the step (a), the processor may divide the initial target charging amount into a plurality of sub-charging amounts in a unit of a pre-defined fixed charging amount, divide the initial target charging amount into a plurality of sub-charging amounts at a pre-defined ratio, or divide the initial target charging amount into a plurality of sub-charging amounts in a unit of a charging amount chargeable for a pre-defined time.

In addition, in the step (a), the processor may divide the initial target charging amount at a pre-defined ratio and repeatedly divide the remainder of the initial target charging amount at the pre-defined ratio to divide the initial target charging amount into a plurality of sub-charging amounts.

In addition, the initial target charging amount may be set by being input from a user terminal or may be pre-stored in the memory.

Meanwhile, according to a preferred embodiment of the present disclosure for solving the above-mentioned technical problems, there is provided an electric vehicle charging control apparatus including a memory storing predetermined instructions and a processor. The processor, which executes the instructions stored in the memory, performs the steps of: (a) requesting payment authorization for a charging cost of an initial target charging amount from a charging station, and if payment authorization fails, dividing the initial target charging amount into a plurality of sub-charging amounts; (b) calculating a charging cost for a sub-charging amount and requesting payment authorization for the calculated charging cost from the charging station; and (c) if payment authorization for the sub-charging amount is successful, performing charging for the sub-charging amount and settling the charging cost, checking whether charging of the initial target charging amount is completed, and if charging of the initial target charging amount is not completed, proceeding to the step (b) to perform charging for the next sub-charging amount.

In addition, the processor of the electric vehicle charging control apparatus according to another preferred embodiment of the present disclosure may further perform, before the step (a): when the charging station is connected to the electric vehicle, transmitting a contract certificate stored in the memory to the charging station to request validity authentication of the contract certificate; and if the validity of the contract certificate is authenticated, receiving a charging rate table from the charging station and calculating the charging cost of the initial target charging amount according to the charging rate table.

In addition, the processor of the electric vehicle charging control apparatus according to another preferred embodiment of the present disclosure may further perform, if payment authorization for the sub-charging amount fails, disconnecting a charger connector and terminating the charging process.

In addition, in the step (a), the processor may divide the initial target charging amount into a plurality of sub-charging amounts in a unit of a pre-defined fixed charging amount, divide the initial target charging amount into a plurality of sub-charging amounts at a pre-defined ratio, or divide the initial target charging amount into a plurality of sub-charging amounts in a unit of a charging amount chargeable for a pre-defined time.

In addition, in the step (a), the processor may divide the initial target charging amount at a pre-defined ratio and repeatedly divide the remainder of the initial target charging amount at the pre-defined ratio to divide the initial target charging amount into a plurality of sub-charging amounts.

In addition, the initial target charging amount may be set by being input from a user terminal or may be pre-stored in the memory.

### Effects of the Invention

A PnC-based electric vehicle charging control apparatus and method according to a preferred embodiment of the present invention for solving the above-described problems, in a case where payment authorization fails in a payment authorization process performed before actual charging and cost payment occur although the validity of the contract certificate has been authenticated, divides the initial target charging amount into a plurality of sub-charging amounts and sequentially performs charging and fee payment for each sub-charging amount, thereby enabling automatic charging up to a payable amount even in a state where the user cannot confirm the payable charging power amount and charging fee.

### Brief Description of Drawings

FIGS. 1a and 1b are diagrams explaining a charging process according to the ISO 15118-2 standard.
FIG. 2 is a diagram showing the overall connection configuration of a PnC-based electric vehicle charging control apparatus according to a preferred embodiment of the present invention.
FIG. 3 is a block diagram showing the detailed configuration of a PnC-based electric vehicle charging control apparatus according to a preferred embodiment of the present invention.
FIG. 4 is a diagram explaining the overall flow of a PnC-based electric vehicle charging control method according to a preferred embodiment of the present invention.

### Mode for Carrying Out the Invention

Hereinafter, preferred embodiments of the present invention will be described with reference to the drawings.

Here, the above-described objects, features, and advantages of the present invention will become clearer through the following detailed description related to the accompanying drawings. However, as the present invention may have various changes and may have various embodiments, specific embodiments will be illustrated in the drawings and described in detail below.

Throughout the specification, the same reference numerals basically represent the same components. In addition, components having the same functions within the scope of the same idea appearing in the drawings of each embodiment will be described using the same reference numerals.

When it is stated in the specification that a certain part "includes" a certain component, this means that other components are not excluded but may be further included, unless otherwise particularly stated to the contrary. In addition, terms such as "... unit", "module", etc. described in the specification mean a unit that processes at least one function or operation, which may be implemented by hardware or software, or by a combination of hardware and software.

If it is determined that a detailed description of a well-known function or configuration related to the present invention may unnecessarily obscure the gist of the present invention, the detailed description thereof will be omitted. In addition, numbers (for example, first, second, etc.) used in the description process of this specification are merely identification symbols for distinguishing one component from another component.

An electric vehicle charging control apparatus and method according to a preferred embodiment of the present invention to be described below will be exemplarily described as following the Plug-and-Charge (PnC) protocol specified in the ISO 15118-2 standard.

Except for the characteristic configuration of the present invention explicitly described below, the overall charging procedure and charging payment procedure are the same as those applied to the above-mentioned ISO 15118-2 standard.

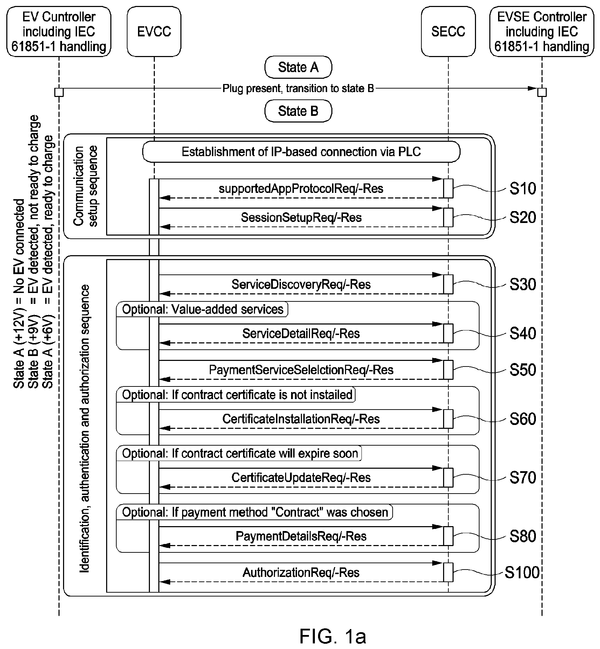

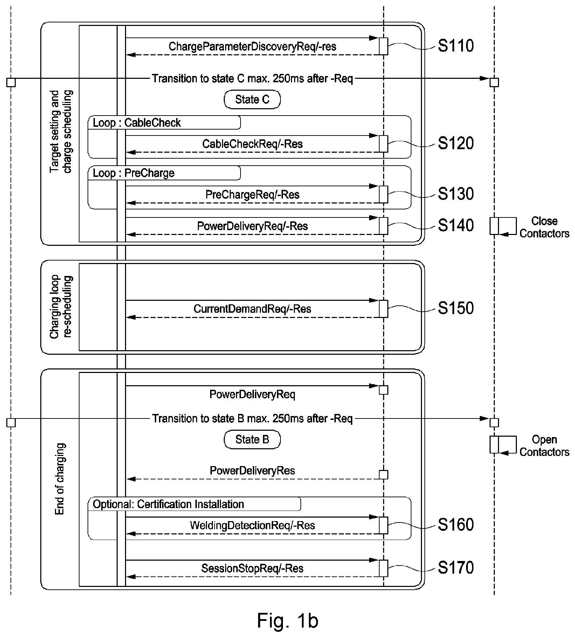

First, referring to FIGS. 1a and 1b illustrating a charging payment process according to the ISO 15118-2 standard, the charging and payment process according to the ISO 15118-2 standard will be described. Between a charging station (abbreviated as SECC (Supply Equipment Communication Controller)) and a charging control apparatus (abbreviated as EVCC (Electric Vehicle Communication Controller)), a SupportedAppProtocol step (S10) in which messages for setting an application layer protocol between the EVCC and the SECC are exchanged, and a SessionSetup stage (S20) in which the EVCC transmits a message requesting to open one V2G communication session and the SECC responds with whether a new communication session or a previous communication session join is successful through the corresponding message are performed, so that a communication channel is established between the charger (SECC) and the charging control apparatus (EVCC).

Thereafter, a ServiceDiscovery step (S30) in which the EVCC requests discovery of all services provided by the SECC to the SECC, and the SECC responds with services that can be provided, such as AC charging, DC charging, EIM mode, and plug-and-charge mode, etc., and a ServiceDetail step (S40) in which the EVCC requests specific additional information from the SECC and the SECC provides the corresponding detailed parameter information, are performed.

A PaymentServiceSelection step (S50) in which the EVCC requests a payment method (EIM/Plug-and-Charge) for services provided by the SECC and the SECC responds with whether the selected service and payment method are accepted, a CertificateInstallation step (S60) in which the EVCC requests certificate installation to the SECC and installs the requested contract certificate if there is no installed contract certificate, a CertificateUpdate step (S70) in which the EVCC requests contract certificate renewal if there is a contract certificate about to expire, a PaymentDetail step (S80) in which the EVCC transmits a contract certificate chain and EMAID to the SECC to request a Challenge if the payment method is contract-based charging (plug-and-charge), the SECC verifies the EMAID and contract certificate chain and responds with a Challenge in the form of a 128-bit long random number if they are trustworthy, and an Authorization step (S100) in which the EVCC signs the request message body including the Challenge with the private key of the contract certificate, and the SECC verifies this signature, verifies whether it matches the Challenge sent previously, and responds with whether charging is approved, are sequentially performed.

Next, a ChargeParameterDiscovery step (S110) is performed in which the EVCC and SECC exchange their respective technical charging limits by delivering maximum and minimum allowable voltage levels and current amounts, the EVCC notifies the SECC of the charging power amount and desired departure time, and the SECC proposes a charging schedule to the EVCC. Here, the charging schedule includes the maximum power that can be charged while the electric vehicle is connected to the charging station and an optional SalesTariff.

Next, a CableCheck step (S120) of performing a cable check for safe charging, a PreCharge step (S130) of adjusting the output voltage of the charging station to the battery voltage of the electric vehicle, and a PowerDelivery step (S140) in which the EVCC requests power supply to the SECC by transmitting PowerDeliveryReq and transmits a charging profile to be followed by the EVCC during the charging process, and the SECC having received the PowerDeliveryReq message transmits a PowerDeliveryRes message including information on whether power is available to the EVCC, are performed.

Thereafter, a charging loop is performed by performing a CurrentDemand step (S150) in which the electric vehicle requests a specific current to the charging station by transmitting a CurrentDemandReq, and the SECC transmits a CurrentDemandRes to the EVCC to notify the electric vehicle of the state of the charging station and the current output voltage and current.

Finally, a SessionStop step (S170) is performed, thereby terminating the charging process according to the PnC protocol.

The charging control method according to a preferred embodiment of the present invention to be described below is performed based on the above-mentioned ISO 15118-2 standard, and details not specifically described are the same as the contents specified in the ISO 15118-2 standard shown in FIGS. 1a and 1b.

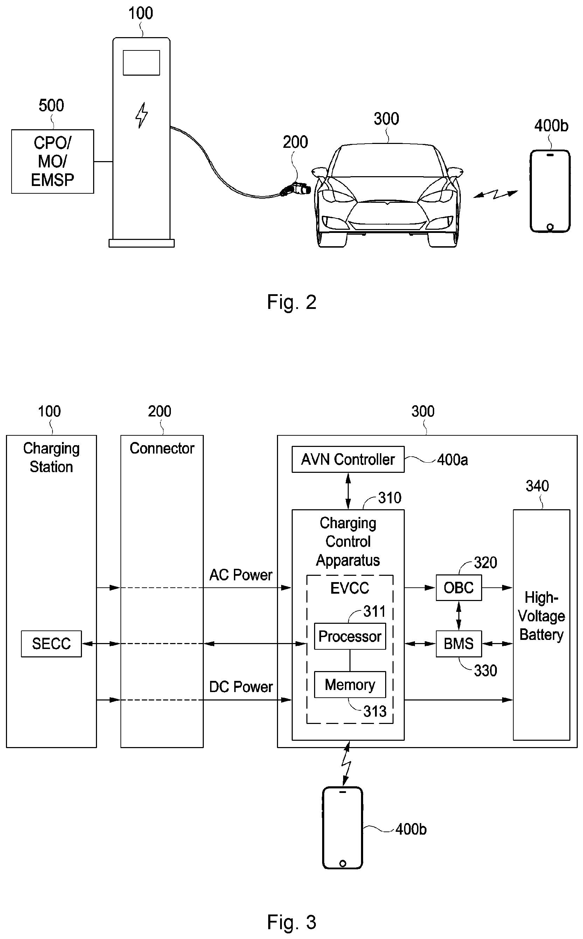

FIG. 2 is a diagram showing the overall connection configuration of a PnC-based electric vehicle charging control apparatus according to a preferred embodiment of the present invention, and FIG. 3 is a block diagram showing the detailed configuration of a charging control apparatus according to a preferred embodiment of the present invention.

Referring to FIGS. 2 and 3, a PnC-based electric vehicle charging control apparatus 310 according to a preferred embodiment of the present invention is installed inside an electric vehicle, is connected to a charging station 100 through a connector 200, controls charging power to be supplied from the charging station 100 to the electric vehicle 300, and performs fee payment for the charging power.

In addition, the charging control apparatus 310 is connected to an AVN controller 400a installed in the vehicle, displays charging-related information to the user through the AVN, receives a power amount to be charged from the user, and transmits it to the charging station.

In addition, the charging control apparatus 310 is connected to a user's mobile communication terminal 400b through a short-range communication network such as Bluetooth or a mobile communication network, transmits charging-related information to the mobile communication terminal 400b to display it to the user, receives the power amount to be charged input by the user from the mobile communication terminal 400b, and transmits the power amount to the charging station.

In addition, in a modified embodiment of the present invention, the mobile communication terminal 400b may directly access the charging station through a wireless communication network and transmit the power amount to be charged.

Hereinafter, for convenience of description, a configuration that displays information to the user and receives information from the user is collectively referred to as user terminals 400a, 400b regardless of the installation location or implementation method, and the above-mentioned AVN controller 400a and mobile communication terminal 400b are also included in the user terminals (400a, 400b).

The charging station 100 is connected to a charging circuit (not shown) and the charging control apparatus 310 of the electric vehicle 300 through the connector 200, supplies charging power to the battery 340 through the charging circuit to charge the high-voltage battery 340, and not only mutually transmits and receives charging-related information with the charging control apparatus 310, but also mutually transmits and receives charging fee payment information for performing charging fee payment in a Plug-and-Charge method.

A user, who is an operator of an electric vehicle to perform charging, enters into a PnC-related service use contract with a Charge Point Operator (CPO), a Mobility Operator (MO), or an eMobility Service Provider (eMSP), and a contract certificate is installed in the electric vehicle at the time of initial charging. Thereafter, the PnC service is selected at the charging station 100 associated with the corresponding CPO, MO, or eMSP (500) to pay the charging fee.

Further referring to FIG. 3, the electric vehicle includes a charging control apparatus 310, an OBC 320, a BMS 330, and a high-voltage battery 340 therein, and may further include an AVN controller 400a therein.

The OBC (OnBoard Charger) 320 converts AC power input from the charging station 100 through the connector 200 into DC power to charge the battery 340, and the BMS (Battery Management System) 330 controls the overall charging process within the electric vehicle.

The AVN controller 400a performs a function of outputting various information to the user and receiving information from the user. In relation to the present invention, the AVN controller 400a displays charging-related information to the user, receives the charging power amount from the user, and outputs it to the charging control apparatus 310.

The charging control apparatus 310 installed in the vehicle includes a processor 311 and a memory 313. The memory 313 according to a preferred embodiment of the present invention may store instructions executable by the processor 311 and programs executable by the processor 311, and may also store input/output data. Examples of the memory 313 may include an SSD (Solid State Drive), flash memory, ROM (Read-Only Memory), RAM (Random Access Memory), and the like.

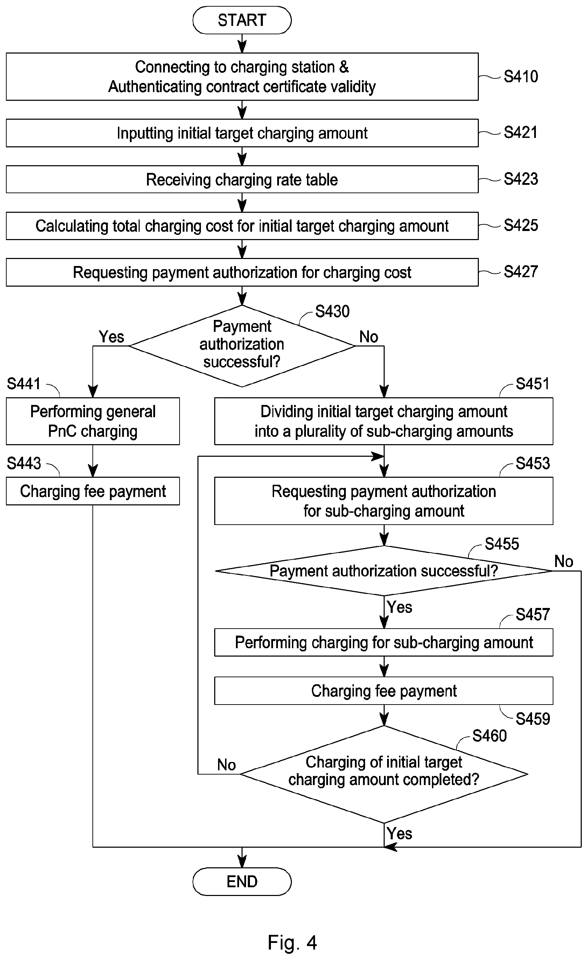

The processor 311 according to a preferred embodiment of the present invention may be implemented as a CPU (Central Processing Unit) or a similar device (e.g., MPU (Micro Processing Unit), MCU (Micro Control Unit), etc.). By executing instructions stored in the memory 313, the processor 311 performs each step of a charging control method to be described later with reference to FIG. 4, and performs a function of an EVCC (Electric Vehicle Communication Controller) in performing PnC payment to communicate with an SECC (Supply Equipment Communication Controller) installed in the charging station 100.

In addition, the processor 311 is operatively linked with the OBC (OnBoard Charger) 320 and the BMS (Battery Management System) 330 to control DC power received from the charging station 100 through the connector 200 to be output to the battery 340 so that the battery 340 is charged, or to control AC power to be output to the OBC 320 and converted into DC power and then charge the battery 340.

Specific functions of the charging control apparatus 310 of the present invention will be described in more detail with further reference to FIG. 4.

FIG. 4 is a diagram explaining the overall flow of an electric vehicle charging control method according to a preferred embodiment of the present invention.

With further reference to FIG. 4, a PnC-based electric vehicle charging control method performed by the electric vehicle charging control apparatus 310 shown in FIGS. 2 and 3 will be described. In a state where a user has pre-entered into a PnC-related service use contract with a Charge Point Operator (CPO), a Mobility Operator (MO), or an eMobility Service Provider (eMSP) and stored a contract certificate in the charging control apparatus 310, when the charger connector 200 of the charging station 100 is connected to the electric vehicle 300, steps S10 to S100 of FIG.1a are performed, the PnC charging process is initiated, the contract certificate stored in the memory 313 is delivered to the charging station 100, the charging station 100 authenticates the validity of the contract certificate, and if validity authentication of the contract certificate fails, the charging process is terminated (S410).

If the validity of the contract certificate is authenticated, the processor 311 receives an initial target charging power amount from the user terminal (400a, 400b) (S421). As described above, the processor 311 may receive the charging power amount from the user terminal (400a, 400b) through the AVN controller 400a, or may receive the charging power amount through an application program (APP) installed in the user terminal (400a, 400b), and the charging power amount input from the user is set as a target charging power amount (hereinafter abbreviated as "target charging amount"). At this time, the user may directly enter the target charging amount in units of kWh, and if the user enters the target charging amount in units of money, this may be converted into a power amount in units of kWh, and if the user enters it as charging time, it may be converted into a target charging amount in units of kWh chargeable during the corresponding time.

If a default value of the charging power amount (e.g., a charging amount for charging up to 80% of the full battery charge amount) is pre-set and stored in the memory 313, the processor 311 may set the charging power amount required for charging up to the default value stored in the memory 313 as the target charging amount instead of receiving the charging power amount input through the user terminal (400a, 400b). For example, if the current charging amount is 20% and the default value is 80%, the power amount for charging 60% becomes the target charging amount.

In the example shown in FIG. 4, an example has been described in which, after the validity of the contract certificate is authenticated, the processor 311 receives the initial target charging amount from the user terminal (400a, 400b), but it should be noted that in another embodiment of the present invention, the charging control apparatus 310 may be configured to receive the initial target charging amount from the user terminal (400a, 400b) and store it in the memory 313, and then authenticate the validity of the contract certificate when the charger connector 200 is connected.

The processor 311 transmits the initial target charging amount entered by the user to the charging station 100, and receives a charging schedule from the charging station 100 (S423). At this time, a charging rate table is included in the charging schedule.

The processor 311 that has received the charging rate table from the charging station 100 calculates an estimated total charging cost for the initial target charging amount according to the received charging rate table (S425).

Thereafter, the processor 311 requests payment authorization for the estimated total charging cost from the charging station 100 (S427).

If payment authorization from the charging station 100 is successful (S430), the processor 311 performs a general PnC-based charging process by performing starting from step S120 shown in FIG. 1b (S441).

When the general charging process is completed, payment for the charging fee corresponding to the actually performed charging is performed, and the user terminates all charging processes by disconnecting the charger connector 200 from the electric vehicle 300 (S443).

Meanwhile, in step S430, if payment authorization for the initial target charging amount fails from the charging station 100, the processor 311 divides the initial target charging amount into a plurality of sub-charging amounts (S451), calculates an estimated charging cost for the first sub-charging amount, and requests payment authorization from the charging station 100 (S453).

In step S451, the initial target charging amount may be divided into a plurality of sub-charging amounts in various ways. For example, the initial target charging amount may be divided into units of a fixed charging amount (e.g., 1 kWh, 5 kWh, 10 kWh, etc.). The initial target charging amount may be divided into units of a charging amount at a pre-defined ratio (%) (e.g., 10%, 20%, etc., of the target charging amount). The initial target charging amount may be divided into units of a charging amount chargeable during a pre-defined time (e.g., 1 minute, 5 minutes, 10 minutes, etc.). In step S451, in what way the division will be performed may be pre-set by the user terminal (400a, 400b) or may be set as a default in advance.

In step S453, if payment authorization for the sub-charging amount is successful (S455), the processor 311 performs a general PnC-based charging process for the payment-authorized sub-charging amount by performing starting from stage S110 shown in FIG. 1b (S457), and pays the charging fee for the sub-charging amount (S459).

Thereafter, it is checked whether charging of the initial target charging amount has been completed (i.e., it is checked whether a remaining sub-charging amount exists) (S460), and if charging of the initial target charging amount has been fully completed, the charging process is terminated by disconnecting the charger connector 200 from the electric vehicle 300.

If, as a result of checking in step S460, there is a sub-charging amount remaining that is not yet completed, the process proceeds to step S453 and charging for the next sub-charging amount is performed. For example, if the target charging amount is 10 kWh and each of the plurality of sub-charging amounts is 2 kWh, after charging for the first sub-charging amount of 2 kWh is completed, charging is performed for the next sub charging amount of 2 kWh by performing the above-described steps S453 through S459, and the above-described steps S453 to S459 are sequentially performed respectively for the next sub-charging amounts of 2 kWh.

Meanwhile, in the above-described step S455, if payment authorization for the sub-charging amount is not successful, all charging processes are terminated.

For example, if the initial target charging amount was 12 kWh and the unknown charging amount that was payable with an contract certificate was 9 kWh, in the case of dividing the initial target charging amount into a plurality of sub-charging amounts in units of 2 kWh, charging up to the 4th sub-charging amount is automatically completed, and the charging process is terminated as payment authorization fails in the payment authorization step (S455) for the 5th sub-charging amount.

In step S457 of the preferred embodiment of the present invention described so far, charging is performed in units of a sub-charging amount of a fixed amount or a fixed ratio set in advance, but in another preferred embodiment of the present invention, charging may be performed by dividing the target charging amount and the remaining target charging amount at a certain ratio.

For example, in another embodiment of the present invention, in step S451, 50% of the target charging amount and 50% of the remaining target charging amount may be divided into equal ratios, and the above-described steps S453 to S460 may be sequentially performed.

In this case, step S453 requests charging fee payment authorization to the charging station 100 for a sub-charging amount corresponding to 50% of the initial charging target amount, and if payment authorization is successful, performs charging for 50% of the initial charging target amount and then performs fee payment.

Thereafter, the processor 311 requests payment authorization from the charging station 100 for a sub-charging amount (25% of the initial target charging amount) corresponding to 50% of the remaining target charging amount (50% of the initial target charging amount), and if payment authorization is successful, charging is performed for 50% of the remaining charging target amount (25% of the initial target charging amount) and then fee payment is performed. And the above-described process is repeated for the remaining target charging amount (25% of the initial target charging amount).

The electric vehicle charging control method according to the preferred embodiment of the present invention described so far may be implemented as a computer program implemented with instructions executable in a computer and stored in a non-transitory storage medium.

The storage medium includes all kinds of recording devices in which data that can be read by a computer system is stored. Examples of computer-readable storage media include ROM, RAM, CD-ROM, optical data storage devices, and the like. In addition, the computer-readable storage medium may be distributed in computer systems connected through a network, and computer-readable codes may be stored and executed in a distributed manner.

So far, the present invention has been explained at centering on its preferred embodiments. A person with ordinary knowledge in the technical field to which the present invention belongs will be able to understand that the present invention can be implemented in a modified form within a range that does not deviate from the essential characteristics of the present invention. Therefore, the disclosed embodiments should be considered from an explanatory point of view rather than a limiting point of view. The scope of the present invention is shown in the claims rather than the foregoing description, and all differences within the equivalent scope should be interpreted as being included in the present invention.

## Claims

1. A PnC-based electric vehicle charging control method performed in an electric vehicle charging control apparatus including a memory storing predetermined instructions and a processor executing the instructions, the method comprising:
(a) requesting, by the processor, payment authorization for a charging cost of an initial target charging amount from a charging station, and if payment authorization fails, dividing the initial target charging amount into a plurality of sub-charging amounts;
(b) calculating, by the processor, a charging cost for a sub-charging amount and requesting payment authorization for the calculated charging cost from the charging station; and
(c) if payment authorization for the sub-charging amount is successful, performing, by the processor, charging for the sub-charging amount and settling the charging cost, checking whether charging of the initial target charging amount is completed, and if charging of the initial target charging amount is not completed, proceeding to the step (b) to perform charging for the next sub-charging amount.

2. The method of claim 1, further comprising, before the step (a):
when the charging station is connected to the electric vehicle, transmitting, by the processor, a contract certificate stored in the memory to the charging station to request validity authentication of the contract certificate; and
if the validity of the contract certificate is authenticated, receiving, by the processor, a charging rate table from the charging station and calculating the charging cost of the initial target charging amount according to the charging rate table.

3. The method of claim 1, further comprising:
if payment authorization for the sub-charging amount fails, disconnecting a charger connector and terminating the charging process by the processor.

4. The method of claim 1,
wherein in the step (a), the processor divides the initial target charging amount into a plurality of sub-charging amounts in a unit of a pre-defined fixed charging amount, divides the initial target charging amount into a plurality of sub-charging amounts at a pre-defined ratio, or divides the initial target charging amount into a plurality of sub-charging amounts in a unit of a charging amount chargeable for a pre-defined time.

5. The method of claim 1,
wherein in the step (a), the processor divides the initial target charging amount at a pre-defined ratio, and repeatedly divides the remainder of the initial target charging amount at the pre-defined ratio to divide the initial target charging amount into a plurality of sub-charging amounts.

6. The method of claim 1,
wherein the initial target charging amount is set by being input from a user terminal or is pre-stored in the memory.

7. A computer-readable recording medium recording a program for executing the electric vehicle charging control method according to any one of claims 1 to 6.

8. An electric vehicle charging control apparatus including a memory storing predetermined instructions and a processor, the processor being configured to execute the instructions stored in the memory to perform the following steps:
(a) requesting payment authorization for a charging cost of an initial target charging amount from a charging station, and if payment authorization fails, dividing the initial target charging amount into a plurality of sub-charging amounts;
(b) calculating a charging cost for a sub-charging amount and requesting payment authorization for the calculated charging cost from the charging station; and
(c) if payment authorization for the sub-charging amount is successful, performing charging for the sub-charging amount and settling the charging cost, checking whether charging of the initial target charging amount is completed, and if charging of the initial target charging amount is not completed, proceeding to the step (b) to perform charging for the next sub-charging amount.

9. The apparatus of claim 8,
wherein the processor further performs, before the step (a):
when the charging station is connected to the electric vehicle, transmitting a contract certificate stored in the memory to the charging station to request validity authentication of the contract certificate; and
if the validity of the contract certificate is authenticated, receiving a charging rate table from the charging station and calculating the charging cost of the initial target charging amount according to the charging rate table.

10. The apparatus of claim 8,
wherein the processor further performs, if payment authorization for the sub-charging amount fails, disconnecting a charger connector and terminating the charging process.

11. The apparatus of claim 8,
wherein in the step (a), the processor divides the initial target charging amount into a plurality of sub-charging amounts in a unit of a pre-defined fixed charging amount, divides the initial target charging amount into a plurality of sub-charging amounts at a pre-defined ratio, or divides the initial target charging amount into a plurality of sub-charging amounts in a unit of a charging amount chargeable for a pre-defined time.

12. The apparatus of claim 8,
wherein in the step (a), the processor divides the initial target charging amount at a pre-defined ratio, and repeatedly divides the remainder of the initial target charging amount at the pre-defined ratio to divide the initial target charging amount into a plurality of sub-charging amounts.

13. The apparatus of claim 8,
wherein the initial target charging amount is set by being input from a user terminal or is pre-stored in the memory.
